# EUROPÄISCHE PATENTSCHRIFT

(11) **EP 0 498 017 B1**
(45) Veröffentlichungstag und Bekanntmachung des Hinweises auf die Patenterteilung: **13.10.1993**
(21) Anmeldenummer: 91101734.1
(22) Anmeldetag: 08.02.1991
(51) Int. Cl.: B09B 3/00, A62D 3/00, B01D 3/10, B01D 3/34

(54) **Verfahren zur Entfernung von Schadstoffen aus verunreinigtem Material, insbesondere kontaminierten Böden und Bauschutt**
Process for removing pollutants from contaminated material, more particularly from contaminated soil and rubble
Procédé d'élimination d'éléments polluants de matériaux contaminés, notamment de sols et de gravats contaminés

(43) Veröffentlichungstag der Anmeldung: 12.08.1992
(73) Patentinhaber: Harbauer GmbH & Co. KG, 14052 Berlin (DE); Schade, Horst, Dipl.-Ing., 45525 Hattingen (DE)
(72) Erfinder: Schade, Horst, W-4320 Hattingen (DE)
(74) Vertreter: Behrendt, Arne

(56) Entgegenhaltungen:
- EP-A- 0 253 079
- EP-A- 0 388 487
- DE-A- 3 520 819
- DE-A- 3 738 704
- US-A- 4 715 965

## Beschreibung

Die Erfindung betrifft ein Verfahren zur Entfernung von Schadstoffen aus verunreinigtem Material, insbesondere verunreinigten Böden und Bauschutt, bei dem das von groben Bestandteilen durch Sieben und Brechen befreite Material einer Destillation bei einer Temperatur von 300 bis 600 °C, vorzugsweise einer Vakuumdestillation bei einer Temperatur von 350 bis 450 °C unterworfen wird.

Aus der europäischen Patentanmeldung EP-A-0 388 487 ist es bekannt, einen von groben Bestandteilen durch Sieben und Brechen vorgereinigten Boden einer Extraktion durch mit Zusatzmitteln versetztes Waschwasser zu unterwerfen, den Boden anschließend vom Waschwasser zu trennen, mit Spülwasser nachzuspülen und das Spülwasser durch einen Reinigungsprozeß von den aus dem Boden extrahierten Schadstoffen zu befreien. Dabei wird der Extraktionsprozeß mit Waschwasser, dem gegebenenfalls Zusatzmittel zugesetzt sind, weitgehend getrennt von dem ein- oder mehrstufigen Spül- und Sortierprozeß durchgeführt und vor der Extraktion durch trockene oder nasse Klassierverfahren eine feinste Fraktion mit einer Korngröße bis 150 µm abgetrennt. Die getrocknete Feinstfraktion wird anschließend der Destillation unterworfen. Mit dem bekannten Verfahren läßt sich die Reinigung von kontaminierten Böden durchführen. Das bekannte Verfahren ist insofern energie- und kostenträchtig, als der durch Sieben oder Brechen von groben Bestandteilen befreite Boden einer umfangreichen Vorbehandlung durch einen Extraktions-, Spül- und Trocknungsprozeß unterworfen wird, bevor die getrocknete Feinstfraktion der Destillation unterworfen wird. Dies ist insbesondere darauf zurückzuführen, daß der Boden normaler Weise nur etwa 10 bis 15 % Wasser enthält, während der nach dem bekannten Verfahren behandelte Boden nach dem Naßwaschprozeß bei optimaler Verpressung in einer Kammerfilterpresse noch einen Wassergehalt von mindestens 30 % aufweist.

Der Erfindung liegt die Aufgabe zugrunde, daß bekannte Verfahren zu vereinfachen und die Vorbehandlung des von groben Bestandteilen befreiten Bodens so durchzuführen, daß das dem Destillationsprozeß unterworfene Material bei der Vorbehandlung nicht zusätzlich mit Wasser angereichert wird.

Es hat sich überraschender Weise herausgestellt, daß dies, ausgehend von einem Verfahren der eingangs beschriebenen Art, dann möglich ist, wenn der von groben Bestandteilen befreite Boden, bevor er destilliert wird, einer Vorbehandlung unterworfen wird, die darin besteht, daß von dem verunreinigten Material eine Fraktion mit einer über 50 mm liegenden Korngröße abgetrennt, auf eine unter 50 mm liegende Korngröße gebrochen, zusammen mit der bei der Abtrennung anfallenden Fraktion mit der unter 50 mm liegenden Korngröße einem Trocknungsprozeß bei einer Temperatur von 100 bis 130 °C unterworfen und anschließend auf eine unter 2 mm liegende Korngröße gebrochen wird. Es kann also auf den aufwendigen Extraktions- und Spülprozeß verzichtet und ein ungereinigter Boden auch dann in technisch und wirtschaftlich vertretbarer Weise von den Schadstoffen befreit werden, wenn er in unterschiedlicher Form, Korngröße und Verschmutzung vorliegt. Darüber hinaus werden Energiekosten infolge des niedrigen Wassergehaltes im natürlichen Boden von maximal 5 bis 15 % gegenüber einem Wassergehalt von ca. 30 % aus dem nach dem bekannten Verfahren extraktiv behandelten und durch eine Filterpresse entwässerten Boden eingespart.

Es hat sich als zweckmäßig erwiesen, das in dem verunreinigten Material vorhandene Wasser bei der Trocknung bis auf einen unter 5 %, vorzugsweise 1 % liegenden Wert zu entfernen. Die Erfindung sieht ferner vor, daß die Vakuumdestillation zur Zerstörung bzw. Verminderung der TCDD-Dioxine sauerstoffarm gefahren wird und alle organischen und anorganischen flüchtigen Verbindungen bei einer unter 2 Stunden liegenden Reaktionszeit und einer unter 30 Minuten liegenden Aufheizzeit auf die Reaktionstemperatur bei einem Vakuum von weniger als 100 mbar absolut, vorzugsweise 50 mbar absolut im Siedebereich unter 400 °C abdestilliert werden. Gemäß einem weiteren Merkmal der Erfindung ist vorgesehen, daß die Vakuumdestillation unter Verwendung eines Spülgases, z. B. CO, Fluor oder CN durchgeführt wird, und gegebenenfalls unter Einsatz von Katalysatoren abdestillierbare flüchtige Schwermetallkomplexe (Carbonyle) gebildet werden.

Als Heizmedium für die vorzugsweise indirekte Trocknung kann Dampf oder ein Wärmeträgeröl benutzt werden.

Es hat sich als zweckmäßig erwiesen, die Destillation in einem Scheiben-, Schnecken- oder Wendeltrockner durchzuführen und als Heizmittel ein Wärmeträgeröl, eine Salzschmelze oder Heizgase zu benutzen.

Bei einer anderen Ausführungsform der Erfindung ist vorgesehen, daß die für die Durchführung des Destillationsprozesses erforderliche Wärme auf das zu behandelnde Material in einem Reaktor durch Feststoffwärmeträger übertragen wird, deren Korngröße größer ist als die des zu behandelnden Materials, d. h. größer als 2 mm, daß der Feststoffwärmeträger nach der Wärmebehandlung durch Absieben abgetrennt, zurückgewonnen und nach erneuter Erwärmung durch direkte Beheizung mittels eines Gas- oder Ölbrenners erneut als Wärmeträger eingesetzt wird. Dabei werden die Menge des im Kreislauf geführten Feststoffwärmeträgers und dessen Korngröße vorzugsweise so gewählt, daß in dem zu behandelnden Material eine Temperatur von 300 bis 600 °C, vorzugsweise 400 °C bis zum Auslauf aus dem Reaktor aufrechterhalten wird und das Gemisch porös bleibt, um die Schadstoffe als Brüden am oberen Ende des Reaktors abziehen zu können. Eine bevorzugte Ausführungsform der Erfindung sieht vor, daß die Wärmemenge, die in den aus der Destillationseinheit abgezogenen Brüden und in dem erwärmten Material vorhanden ist, zur Vorwärmung des für die Trocknung benötigten Dampfes und/oder zu Heizzwecken im Trockner ausgenutzt wird.

In der Zeichnung sind zwei Ausführungsbeispiele der Erfindung dargestellt. Es zeigen:
- Fig. 1: die schematische Darstellung eines Verfahrens zur destillativen Entfernung von Schadstoffen aus verunreinigtem Material, bei dem die Destillation in einem Scheibentrockner durchgeführt wird und
- Fig. 2: die schematische Darstellung eines Verfahrens zur destillativen Entfernung von Schadstoffen aus verunreinigtem Material, bei für die Destillation ein Feststoff-Wärmeträger benutzt wird.

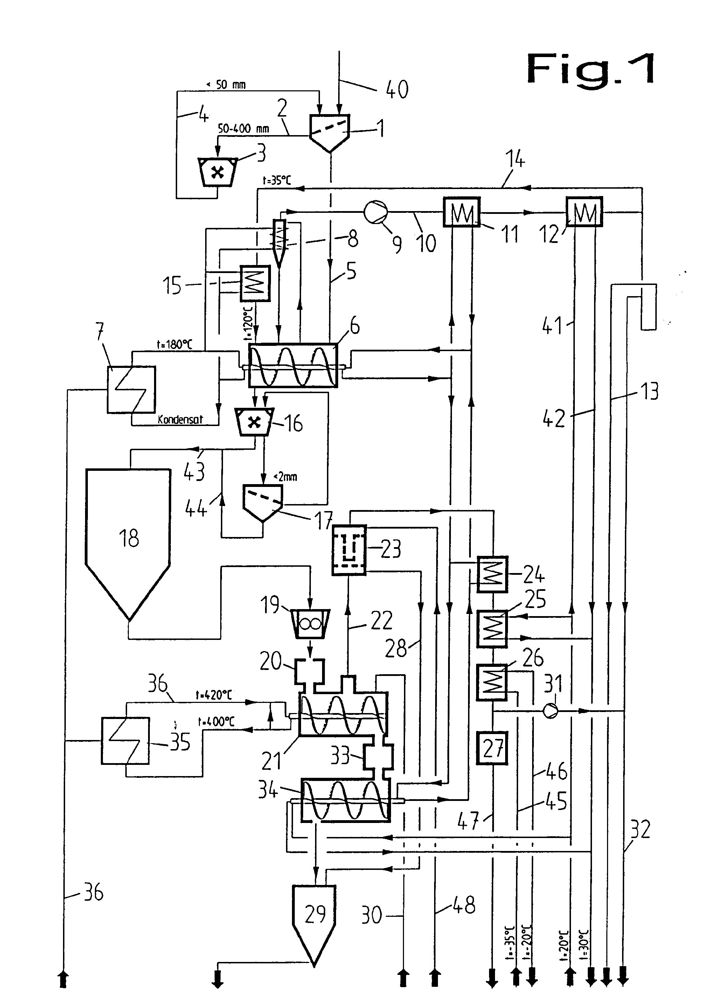

Bei dem in Fig. 1 dargestellten Verfahren wird das kontaminierte Material, bei dem es sich um einen verunreinigten Boden oder verunreinigten Bauschutt handeln kann, über eine Aufgabeeinrichtung (40) einem Sieb (1) zugeführt, in dem eine Fraktion mit einer unter 50 mm liegenden Korngröße abgesiebt wird. Das Überkorn wird über eine Rutsche und ein Band (2) einem Brecher (3) zugeführt, auf eine unter 50 mm liegende Korngröße gebrochen und über ein Band (4) zu dem Ausgangssieb zurückgeführt. Das Unterkorn gelangt über ein Band (5) zu einem Scheibentrockner (6), in dem es mit einem Wärmeträgermedium, z. B. Dampf, aus einem Wärmeerzeuger (7) getrocknet wird. Die Brüden werden in einem Multizyklon (8) von Feststoffen befreit, die wieder in den Trockner zurückgeführt werden. Die in dem Zyklon (8) über Kopf anfallenden Brüden gelangen mittels eines Gebläses (9) über die Leitung (10) in einem Kondensator (11), in dem sie kondensiert werden. Die dabei anfallende Energie wird zur Beheizung des Scheibentrockners (6) verwendet. In einem nachgeschalteten Kondensator (12) wird die Abluft auf ca. 30 °C heruntergekühlt. Die Eintrittsleitung für das Kühlwasser, das eine Temperatur von etwa 20 °C hat, ist mit (41), die Austrittsleitung mit (42) bezeichnet. Das anfallende Kondensat wird über die Leitung (13) einer Abwasseraufbereitung und -reinigung zugeleitet, während ein Teil der Abluft, deren Temperatur bei ca. 35 °C liegt, über eine Leitung (14) und einen Erhitzer (15) zum Trockner (6) als Spülluft zurückgeführt wird.

Der Erhitzer (15), in dem die Abluft auf eine Temperatur von etwa 120 °C erwärmt wird, wird mit Dampf oder einem anderen Medium aus dem Wärmeerzeuger (7) beaufschlagt. Das in dem Scheibentrockner (6) behandelte Material wird einer Mühle (16) zugeführt, in der es auf eine unter 2 mm liegende Korngröße zerkleinert wird. Im Regelfall wird das zerkleinerte Material direkt, z. B. über einen pneumatischen Förderer (43) in ein Silo (18) transportiert, aus dem es kontinuierlich über eine Mühle (19), in der das Material einer Deagglomerierung unterworfen wird, der Vakuumschleuse (20) der Vakuum-Destillationseinheit (21) zugeführt wird. Alternativ kann das in der Mühle (16) zerkleinerte Material durch ein Sieb (17) geführt werden, in dem eine Fraktion mit einer unter 2 mm liegenden Korngröße abgetrennt und über eine Leitung (44) in das Silo (18) geleitet wird. Das Überkorn wird in die Mühle (16) zurückgeführt. In der Vakuum-Destillationseinheit (21) wird der Boden mit Hilfe eines Wärmeträgeröls oder einer Salzschmelze auf eine Produkttemperatur von vorzugsweise 400 °C erhitzt, wobei die Verweilzeit vorzugsweise mehr als eine Stunde beträgt.

Die gebildeten Gase, die über die Leitung (22) abgezogen werden, gelangen nach einer Entstaubung in einem Hochtemperaturfilter (23), das, um eine Kondensation zu vermeiden, beheizt wird, in eine erste Kondensationsstufe (24). Die in dieser anfallende Energie wird zur Beheizung des Scheibentrockners (6) genutzt. In einer zweiten Kondensationsstufe (25) wird die Luft bis auf eine Temperatur von ca. 25 °C mit Kühlwasser aus der Leitung (41) und in einer dritten Kondensationsstufe (26) mit Hilfe eines Kaltwassersatzes mit Sole, die eine Temperatur von - 20 °C bis - 25 °C hat, auf eine Temperatur von unter 5 °C heruntergekühlt. Die Zu- und Abführungsleitungen sind mit (45 bzw. 46) bezeichnet.

Das anfallende Kondensat aus der Destillation, das hochkonzentrierte Schadstoffe enthält, wird über eine Vorlage (27) und eine Leitung (47) einer Verbrennungsanlage zur Entsorgung zugeführt. Das Filter (23) wird mit Inertgas, das über die Leitung (48) zugeführt wird, gespült und der Feststoff über die Leitung (28) dem Fertigproduktsilo (29) zugeführt. Die Vakuum-Destillationseinheit (21) wird mit Spülgas über eine Leitung (30) beschickt. Das Spülgas wird mit der Luft über eine Wasserring-Vakuumpumpe (31), mit der ein Unterdruck von 20 bis 50 Torr absolut erzeugt wird, durch die Leitung (32) zur Abluftreinigung gefördert.

Der gereinigte Boden wird aus der Vakuum-Destillationseinheit (21) über Vakuumschleusen (33) einem Kühler (34) zugeführt. Ein Teil der im Boden befindlichen Energie wird ebenfalls zu Heizzwecken eingesetzt. Der Kühler ist zweistufig ausgebildet. In einer Nachkühlung wird mit Wasser die Produkttemperatur des Bodens bis auf 40 bis 50 °C gesenkt. Das Produkt wird dann über eine pneumatische Fördereinrichtung dem Fertigproduktsilo (29) zugeführt. Mit (35) ist ein weiterer Wärmeerzeuger bezeichnet, in dem das für die Destillation benutzte Heizmedium mit dem über die Leitung (36) zugeführten Heizmittel auf die erforderliche Temperatur von z. B. 420 °C aufgewärmt wird.

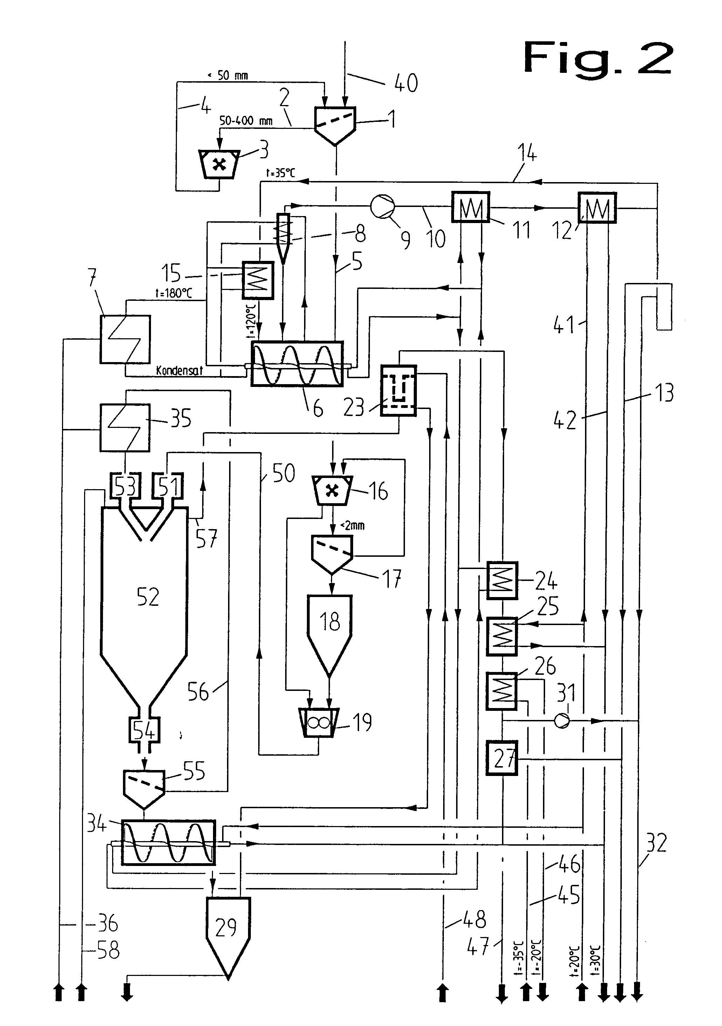

Die auf Fig. 2 dargestellte Ausführungsform benutzt in Prinzip die in Zusammenhang mit Fig. 1 beschriebene Verfahrensweise. Insoweit wurden für sich entsprechende Anlageteile die gleichen Bezugszeichen verwendet, deren Erläuterung und Verständnis sich aus der Beschreibung des Ausführungsbeispiels gemäß Fig. 1 ergeben.

Die Ausführungsform gemäß Fig. 2 unterscheidet sich von der vorstehend beschriebenen durch den Aufbau und die Betriebsweise der Vakuum-Destillationseinheit.

Das dem Silo (18) entnommene und in der Mühle (19) in der beschriebenen Art deagglomerierte Material wird über eine Leitung (50) der Vakuumschleuse (51) einer Destillationseinheit (52) zugegeben, in der der Boden mit als Wärmeträgermedium dienenden Feststoffen, die in dem Wärmeerzeuger (35) aufgeheizt und über eine Schleuse (53) zugegeben werden, erhitzt wird. Als Wärmeträger dient vorzugsweise Kies mit einer Korngröße von 4 bis 10 mm. Die Menge des Wärmeträgers beträgt ein Mehrfaches des Bodendurchsatzes, um den Boden auf eine Temperatur auf etwa 400 °C zu erwärmen. Das Kies-Bodengemisch wird über eine Vakuumschleuse (54) abgezogen und über ein Sieb (55) getrennt. Der Kies wird über ein mit (56) bezeichnetes Fördersystem zu dem Wärmeerzeuger (35) zurückgeführt, in dem er direkt erhitzt wird, und gelangt über die Schleuse (53) zurück in die Destillationseinheit (52). Die in dieser gebildeten Gase werden über eine Leitung (57) abgezogen und dem Hochtemperaturfilter (23) zugeführt. Der in dem Sieb (55) abgetrennte Boden wird über den Kühler (34) dem Fertigproduktsilo (29) zugeführt. Das Hochtemperaturfilter (23) und die sich daran anschließenden Anlagen sowie der Kühler (34) werden in der in Zusammenhang mit Fig. 1 beschriebenen Weise betrieben. Mit (58) ist eine Spülgasleitung bezeichnet, die der Spülgasleitung (30) des ersten Ausführungsbeispiels entspricht.

## Patentansprüche

1. Verfahren zur Entfernung von Schadstoffen aus verunreinigtem Material, insbesondere verunreinigten Böden und Bauschutt, bei dem das von groben Bestandteilen durch Sieben und Brechen befreite Material einer Destillation bei einer Temperatur von 300 bis 600 °C, vorzugsweise einer Vakuumdestillation bei einer Temperatur von 350 bis 450 °C unterworfen wird, dadurch gekennzeichnet, daß das verunreinigte Material, bevor es dem Destillationsprozeß unterworfen wird, wie folgt vorbehandelt wird: Von dem verunreinigtem Material wird eine Fraktion mit einer über 50 mm liegenden Korngröße abgetrennt, auf eine unter 50 mm liegende Korngröße gebrochen, zusammen mit der bei der Abtrennung anfallenden Fraktion mit der unter 50 mm liegenden Korngröße einem Trocknungsprozeß bei einer Temperatur von 100 bis 130 °C unterworfen und anschließend auf eine unter 2 mm liegende Korngröße gebrochen.

2. Verfahren nach Anspruch 1, dadurch gekennzeichnet, daß das in dem verunreinigten Material vorhandene Wasser bei der Trocknung bis auf einen unter 5 %, vorzugsweise unter 1 % liegenden Wert entfernt wird.

3. Verfahren nach den Ansprüchen 1 und 2, dadurch gekennzeichnet, daß die Vakuumdestillation zur Zerstörung bzw. Verminderung der TCDD-Dioxine sauerstoffarm gefahren wird und alle organischen und anorganischen flüchtigen Verbindungen bei einer unter 2 Stunden liegenden Reaktionszeit und einer unter 30 Minuten liegenden Aufheizzeit auf die Reaktionstemperatur bei einem Vakuum von weniger als 100 mbar absolut, vorzugseise 50 mbar absolut im Siedebereich unter 400 °C abdestilliert werden.

4. Verfahren nach einem der vorhergehenden Ansprüche, dadurch gekennzeichnet, daß die Vakuumdestillation unter Verwendung eines Spülgases, z. B. CO, Fluor oder CN durchgeführt wird, und gegebenenfalls unter Einsatz von Katalysatoren abdestillierbare flüchtige Schwermetallkomplexe (Carbonyle) gebildet werden.

5. Verfahren nach einem der vorhergehenden Ansprüche, dadurch gekennzeichnet, daß als Heizmedium für die vorzugsweise indirekte Trocknung Dampf oder ein Wärmeträgeröl benutzt wird.

6. Verfahren nach einem der vorhergehenden Ansprüche, dadurch gekennzeichnet, daß die Destillation in einem Scheiben-, Schnecken- oder Wendeltrockner durchgeführt wird und als Heizmittel ein Wärmeträgeröl, eine Salzschmelze oder Heizgase benutzt werden.

7. Verfahren nach einem der Ansprüche 1 bis 5, dadurch gekennzeichnet, daß die für die Durchführung des Destillationsprozesses erforderliche Wärme auf das zu behandelnde Material in einem Reaktor durch Feststoffwärmeträger übertragen wird, deren Korngröße größer ist als die des zu behandelnden Materials, d. h. größer als 2 mm, daß der Feststoffwärmeträger nach der Wärmebehandlung durch Absieben abgetrennt, zurückgewonnen und nach erneuter Erwärmung durch direkte Beheizung mittels eines Gas- oder Ölbrenners erneut als Wärmeträger eingesetzt wird.

8. Verfahren nach Anspruch 7, dadurch gekennzeichnet, daß die Menge des im Kreislauf geführten Feststoffwärmeträgers und dessen Korngröße so gewählt werden, daß in dem zu behandelnden Material eine Temperatur von 300 bis 600 °C, vorzugsweise 400 °C bis zum Auslauf aus dem Reaktor aufrechterhalten wird und das Gemisch porös bleibt, um die Schadstoffe als Brüden am oberen Ende des Reaktors abziehen zu können.

9. Verfahren nach einem der vorhergehenden Ansprüche, dadurch gekennzeichnet, daß die Wärmemenge, die in den aus der Destillationseinheit abgezogenen Brüden und in dem erwärmten Material vorhanden ist zur Vorwärmung des für die Trocknung benötigten Dampfes und/oder zu Heizzwecken im Trockner ausgenutzt wird.

## Claims

1. Process for the removal of toxic substances from contaminated material, more especially contaminated soils and building rubble, in which the material which is freed from coarse constituents by sieving and crushing is subjected to distillation at a temperature of 300 to 600°C, preferably vacuum distillation at a temperature of 350 to 450°C, characterised in that the contaminated material, before it is subjected to the distillation process, is pretreated as follows: a fraction of the contaminated material having a grain size of over 50mm is separated, crushed to a grain size which is under 50mm, and together with the fraction having a grain size of under 50mm occurring during separation, is subjected to a drying process at a temperature of 100 to 130°C and is then crushed to a grain size which is under 2mm.

2. Process as claimed in Claim 1, characterised in that the water present in the contaminated material is removed during drying until it has a value of under 5%, and preferably under 1%.

3. Process as claimed in Claims 1 and 2, characterised in that the vacuum distillation is conducted so that it is low in oxygen, in order to destroy or reduce the TCDD-dioxins, and all organic and inorganic volatile compounds are distilled off in a reaction time which is under 2 hours and a heating time of under 30 minutes, at the reaction temperature in a vacuum of less that 100mbar absolute, and preferably 50mbar absolute, within the distillation range of under 400°C.

4. Process as claimed in one of the preceding Claims, characterised in that the vacuum distillation is carried out using a circulation gas, e.g. fluorine or CN, and heavy metal aggregates (carbonyls), which can be distilled off, are formed, if necessary using catalysers.

5. Process as claimed in one of the preceding Claims, characterised in that steam or a heat transfer oil is used as a heating medium for the preferably indirect drying.

6. Process as claimed in one of the preceding Claims, characterised in that the distillation is carried out in a disc drier, screw drier or spiral drier, and a heat transfer oil, molten salt or heating gases are used as heating agents.

7. Process as claimed in one of the Claims 1 to 5, characterised in that the heat necessary for carrying out the distillation process is transmitted to the material being treated in a reactor by solid matter heat transfer agents, whose grain size is larger than that of the material being treated, i.e. larger than 2mm, that the solid matter heat transfer agent, separated by sieving after heat treatment, is recovered, and after renewed heating through direct heating by means of a gas burner or oil burner, is used again as a heat transfer agent.

8. Process as claimed in Claim 7, characterised in that the quantity of solid matter heat transfer agent led in the circuit and its grain size are so selected, that a temperature of 300 to 600°C, and preferably 400°C, is maintained in the material being treated until emergence from the reactor, and the mixture remains porous in order to make it possible to draw off the harmful substances as vapours at the top end of the reactor.

9. Process as claimed in one of the preceding Claims, characterised in that the quantity of heat which is present in the vapours which are drawn off from the distillation unit and are in the heated material is utilized for preheating the steam required for the drying and/or for heating purposes in the drier.

## Revendications

1. Procédé pour éliminer des éléments polluants de matériaux contaminés, notamment de sols et de gravats contaminés, dans lequel les matériaux libérés des composants grossiers par tamisage et broyage sont soumis à une distillation à une température comprise entre 300 et 600°C. et de préférence à une distillation sous vide à une température comprise entre 350 et 450°C, caractérisé en ce que les matériaux contaminés, avant d'être soumis au processus de distillation, sont préalablement traités de la facon suivante: une fraction dont les grains ont une dimension supérieure à 50 mm est séparée des matériaux contaminés, broyée jusqu'à ce que la dimension des grains soit inférieure à 50 mm, soumise avec la fraction qui provient de la séparation et dont les grains ont une dimension inférieure à 50 mm à un processus de séchage à une température comprise entre 100 et 130°C, et finalement broyée jusqu'à ce que la dimension des grains soit inférieure à 2 mm.

2. Procédé selon la revendication 1, caractérisé en ce que l'eau présente dans les matériaux contaminés est évacuée par séchage jusqu'à une valeur inférieure à 5% et de préférence inférieure à 1%.

3. Procédé selon les revendications 1 et 2, caractérisé en ce que la distillation sous vide est réalisée pour détruire ou pour réduire la dioxine TCDD pauvre en oxygène et éliminer par distillation toutes les liaisons volatiles organiques et inorganiques pendant une durée de réaction inférieure à 2 heures et une durée de chauffage inférieure à 30 minutes jusqu'à la température de réaction sous un vide inférieur à 100 mbars absolus, et de préférence à 50 mbars absolus, dans la plage d'ébullition située au-dessous de 400°C.

4. Procédé selon l'une quelconque des revendications précédentes, caractérisé en ce que la distillation sous vide est réalisée en utilisant un gaz de lavage, par exemple du CO, du fluor ou du CN, et en ce que des complexes de métaux lourds volatiles et distillables (carboxyles) sont éventuellement formés en utilisant des catalyseurs.

5. Procédé selon l'une quelconque des revendications précédentes, caractérisé en ce qu'on utilise en tant qu'agent chauffant pour le séchage de préférence indirect de la vapeur ou une huile caloporteuse.

6. Procédé selon l'une quelconque des revendications précédentes, caractérisé en ce que la distillation est réalisée dans un sécheur à disques, à spirale ou hélicoïdal, et en ce qu'on utilise en tant qu'agent chauffant une huile caloporteuse, des sels fondus ou des gaz chauds.

7. Procédé selon l'une des revendications 1 à 5, caractérisé en ce que la chaleur nécessaire à la mise en oeuvre du processus de distillation est transmise au matériau à traiter dans un réacteur par des agents caloporteurs solides dont la dimension des grains est supérieure à celle des grains du matériau à traiter, c'est-à-dire supérieure à 2 mm, que l'agent caloporteur solide est séparé après le traitement thermique par tamisage, récupéré et à nouveau utilisé en tant qu'agent caloporteur après un nouveau chauffage direct au moyen d'un brûleur à gaz ou à huile.

8. Procédé selon la revendication 7, caractérisé en ce que la quantité de l'agent caloporteur solide qui est envoyé dans le circuit et la dimension de ses grains sont choisies de préférence de manière que soit maintenue dans le matériau à traiter une température comprise entre 300 et 600°C, et de préférence de 400°C, jusqu'à la sortie du réacteur, et que le mélange reste poreux de facon que les éléments polluants puissent être évacués sous forme de vapeurs chaudes à l'extrémité supérieure du réacteur.

9. Procédé selon l'une quelconque des revendications précédentes, caractérisé en ce que la quantité de chaleur qui est présente dans les vapeurs chaudes évacuées de l'unité de distillation et dans le matériau chauffé est utilisée pour pré-chauffer la vapeur nécessaire au séchage et/ou à des fins de chauffage dans le sécheur.
